(19) Europäisches Patentamt
European Patent Office
Office européen des brevets

(11) **EP 4 339 840 A1**

(12) **EUROPEAN PATENT APPLICATION**

(43) Date of publication:
**20.03.2024   Bulletin 2024/12**

(21) Application number: **23197504.6**

(22) Date of filing: **14.09.2023**

(51) International Patent Classification (IPC):
**G06N 3/0475** (2023.01)   **G06N 3/047** (2023.01)
**G06N 3/0455** (2023.01)   **G06N 3/08** (2023.01)
**G06N 3/044** (2023.01)   **G06N 3/0464** (2023.01)

(52) Cooperative Patent Classification (CPC):
**G06N 3/0455; G06N 3/047; G06N 3/0475;
G06N 3/08;** G06N 3/044; G06N 3/0464

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022   US 202263406471 P
06.10.2022   KR 20220128144**

(71) Applicants:
• **Samsung Electronics Co., Ltd.**
**Suwon-si, Gyeonggi-do 16677 (KR)**

• **New York University**
**New York, NY 10012 (US)**

(72) Inventors:
• **KWON, Ki Soo**
**Suwon-Si 16678 (KR)**
• **CHO, Kyunghyun**
**New York, 10012 (US)**
• **LEE, Hoshik**
**Suwon-si 16678 (KR)**

(74) Representative: **Arnold & Siedsma**
**Bezuidenhoutseweg 57**
**2594 AC The Hague (NL)**

(54) **METHOD AND DEVICE WITH TRAINING DATABASE CONSTRUCTION**

(57)     An electronic device includes one or more processors and a memory storing instructions configured to, when executed by the one or more processors, cause the one or more processors to: implement a machine learning-based conditional generative model configured to reconstruct target data from latent vectors, the conditional generative model trained based on an existing data set for a target task; determine an extrapolation weight; generate an augmented latent vector and augmented condition data by extrapolating, based on the extrapolation weight, from a latent vector corresponding to the existing dataset and from existing condition data corresponding to the existing dataset; and generate a new dataset comprising augmented target data generated by the conditional generative model based on the augmented condition data and based on the augmented latent vector.

FIG. 2

EP 4 339 840 A1

## Description

BACKGROUND

1. Field

The following description relates to building a new training database (DB) from an existing training DB.

2. Description of Related Art

Neural networks for machine learning is a highly researched topic. A neural network may use an algorithm that learns when classifying an input pattern into specific groups or categories, for example. Such an algorithm may enable a neural network to generate mappings between input patterns and outputs and to have a generalization ability to generate a relatively correct output even for an input pattern that has not been previously learned. To train neural networks, data in unknown fields may be beneficial, in addition to data in known fields.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device includes one or more processors and a memory storing instructions configured to, when executed by the one or more processors, cause the one or more processors to: implement a machine learning-based conditional generative model configured to reconstruct target data from latent vectors, the conditional generative model trained based on an existing data set for a target task; determine an extrapolation weight; generate an augmented latent vector and augmented condition data by extrapolating, based on the extrapolation weight, from a latent vector corresponding to the existing dataset and from existing condition data corresponding to the existing dataset; and generate a new dataset comprising augmented target data generated by the conditional generative model based on the augmented condition data and based on the augmented latent vector.

In comparison to typical interpolation-based mixup techniques described above, data generated based on extrapolation and based on a generative model (e.g., a decoder of a conditional generative model such as a variational autoencoder (VAE)) may have realistic values in a combinatorial space. The electronic device may generate a new dataset that even includes realistic out-of-distribution (OOD) data. In addition, a prediction model trained using extrapolation-based datasets may have a high level of accuracy even for a task in which labels have values in a continuous range (i.e., continuous labels). The electronic device may generate a more realistic dataset for data represented in a combinatorial space such as a molecular structure space (e.g., a space of possible combinations of molecules/atoms). The newly generated dataset may be used as training data for improving the performance of a machine learning model (e.g. a prediction model) configured, for example, to predict physical properties of molecular structures such as pharmaceutical molecules, industrial materials, etc.

The instructions may be further configured to cause the one or more processors to generate a plurality of existing latent vectors from a plurality of pieces of existing target data of the existing dataset based on an encoder model portion of the conditional generative model.

The instructions may be further configured to cause the one or more processors to: apply the extrapolation weight to each of the existing latent vectors and corresponding existing condition data; generate the augmented latent vector through a weighted sum of an extrapolation weight of the existing latent vectors; and generate the augmented condition data through a weighted sum of an extrapolation weight of the existing condition data.

The augmented target data may be out-of-distribution with respect to a data space defined by the existing dataset.

The instructions may be further configured to cause the one or more processors to update the augmented condition data based on the augmented latent vector and the augmented target data.

The instructions may be further configured to cause the one or more processors to update the augmented condition data to increase a likelihood that the augmented target data is to be output from the augmented latent vector and condition data from the conditional generative model.

The instructions may be further configured to cause the one or more processors to, in response to a value computed by an objective function for the augmented target data being out of a threshold range, discard the augmented target data and the augmented condition data.

The instructions may be further configured to cause the one or more processors to train a machine learning-based prediction model to predict condition data from target data using the dataset comprising the augmented target data and the augmented condition data.

The instructions may be further configured to cause the one or more processors to predict new target data of a new molecular structure having a new physical property from the existing target data of an existing molecular structure.

In one general aspect, a processor-implemented method includes: determining an extrapolation weight; generating an augmented latent vector and augmented condition data that are augmented by extrapolating, based on the extrapolation weight, from a latent vector corresponding to an existing dataset for a target task and from existing condition data of the existing dataset; and generating a new dataset comprising augmented target data and the augmented condition data based on a conditional generative model.

The method may further include generating a plurality of existing latent vectors from a plurality of data items of existing target data of the existing dataset based on an encoder model of the conditional generative model.

The generating of the augmented latent vector and the augmented condition data may include: applying the extrapolation weight to each of the existing latent vectors and corresponding existing condition data; generating the augmented latent vector through a weighted sum based on an extrapolation weight of the existing latent vectors; and generating the augmented condition data through a weighted sum based on an extrapolation weight of the existing condition data.

The generating of the new dataset may include generating the augmented target data from the augmented latent vector and the augmented condition data using the conditional generative model.

The augmented target data and the augmented condition data may be out of coverage of existing target data and the existing condition data.

The generating of the new dataset may include updating the augmented condition data based on the augmented latent vector and the augmented target data.

The updating of the augmented condition data may include fixing the augmented latent vector and the augmented target data and updating the augmented condition data to increase a likelihood that the augmented target data is to be output from the augmented latent vector and condition data in the conditional generative model.

The method may further include training a machine learning-based prediction model configured to predict condition data from target data using the dataset including the augmented target data and the augmented condition data.

In one general aspect, a method is performed by a computing apparatus and the method includes: training, with an existing dataset comprising existing data items paired with respective existing labels, a conditional generative neural network (NN) comprising an encoder NN, a decoder NN, and a latent layer therebetween, the existing data items including a first existing data item paired with a first existing label and a second existing data item paired with a second existing label; encoding, by the encoder, the first data item into a first a first latent vector, and encoding, by the encoder, the second data item into a second latent vector; extrapolating, from the first latent vector and the second latent vector, an extrapolated latent vector; extrapolating, from the first label and the second label, an extrapolated label; and providing the extrapolated latent vector and the extrapolated label to the decoder which decodes the extrapolated latent vector based on the extrapolated label.

The extrapolating of the latent vectors and the extrapolating of the labels may both be performed based on a same extrapolation weight.

The decoding may generate a third data item, and the method may further include updating the extrapolated label based on the third data item.

Other features and aspects will be apparent from the following detailed description, the drawings, and the claims.

According to further aspects of the invention, there are provided an electronic device, a processor-implemented method, and a method performed by a computing apparatus. These aspects are defined by the following set of clauses:

1. An electronic device, comprising:

- one or more processors;
- a memory storing instructions configured to, when executed by the one or more processors, cause the one or more processors to:

    implement a machine learning-based conditional generative model configured to reconstruct target data from latent vectors, the conditional generative model trained based on an existing dataset for a target task; determine an extrapolation weight; generate an augmented latent vector and augmented condition data by extrapolating, based on the extrapolation weight, from a latent vector corresponding to the existing dataset and from existing condition data corresponding to the existing dataset; and generate a new dataset comprising augmented target data generated by the conditional generative model based on the augmented condition data and based on the augmented latent vector.

2. The electronic device of clause 1, wherein the instructions are further configured to cause the one or more processors to:

- generate a plurality of existing latent vectors from a plurality of pieces of existing target data of the existing dataset based on an encoder model portion of the conditional generative model.

3. The electronic device of clause 2, wherein the instructions are further configured to cause the one or more processors to:

- apply the extrapolation weight to each of the existing latent vectors and corresponding existing condition data;
- generate the augmented latent vector through a weighted sum of an extrapolation weight of the existing latent vectors; and
- generate the augmented condition data through a weighted sum of an extrapolation weight of the existing condition data.

4. The electronic device of clause 1, wherein the augmented target data is out-of-distribution with respect to a data space defined by the existing dataset.

5. The electronic device of clause 1, wherein the instructions are further configured to cause the one or more processors to:

- update the augmented condition data based on the augmented latent vector and the augmented target data.

6. The electronic device of clause 5, wherein the instructions are further configured to cause the one or more processors to:

- update the augmented condition data to increase a likelihood that the augmented target data is to be output from the augmented latent vector and condition data from the conditional generative model.

7. The electronic device of clause 1, wherein the instructions are further configured to cause the one or more processors to:

- in response to a value computed by an objective function for the augmented target data being out of a threshold range, discard the augmented target data and the augmented condition data.

8. The electronic device of clause 1, wherein the instructions are further configured to cause the one or more processors to:

- train a machine learning-based prediction model to predict condition data from target data using the dataset comprising the augmented target data and the augmented condition data.

9. The electronic device of clause 1, wherein the instructions are further configured to cause the one or more processors to:

- predict new target data of a new molecular structure having a new physical property from the existing target data of an existing molecular structure.

10. A processor-implemented method, comprising:

- determining an extrapolation weight;
- generating an augmented latent vector and augmented condition data that are augmented by extrapolating, based on the extrapolation weight, from a latent vector corresponding to an existing dataset for a target task and from existing condition data of the existing dataset; and
- generating a new dataset comprising augmented target data and the augmented condition data based on a conditional generative model.

11. The method of clause 10, further comprising:

- generating a plurality of existing latent vectors from a plurality of data items of existing target data of the existing dataset based on an encoder model of the conditional generative model.

12. The method of clause 11, wherein the generating of the augmented latent vector and the augmented condition data comprises:

- applying the extrapolation weight to each of the existing latent vectors and corresponding existing condition data;
- generating the augmented latent vector through a weighted sum based on an extrapolation weight of the existing latent vectors; and
- generating the augmented condition data through a weighted sum based on an extrapolation weight of the existing condition data.

13. The method of clause 10, wherein the generating of the new dataset comprises:

- generating the augmented target data from the augmented latent vector and the augmented condition data using the conditional generative model.

14. The method of clause 10, wherein the augmented target data and the augmented condition data are out of coverage of existing target data and the existing condition data.

15. The method of clause 10, wherein the generating of the new dataset comprises:

- updating the augmented condition data based on the augmented latent vector and the augmented target data.

16. The method of clause 15, wherein the updating of the augmented condition data comprises:

- fixing the augmented latent vector and the augmented target data; and
- updating the augmented condition data to increase a likelihood that the augmented target data is to be output from the augmented latent vector and condition data in the conditional generative model.

17. The method of clause 10, further comprising:

- training a machine learning-based prediction model configured to predict condition data from target data, using the dataset comprising the augmented target data and the augmented condition data.

18. A method performed by a computing apparatus, the method comprising:

- training, with an existing dataset comprising existing data items paired with respective existing labels, a conditional generative neural network (NN) comprising an encoder NN, a decoder NN, and a latent layer therebetween, the existing data items including a first existing data item paired with a first existing label and a second existing data item paired with a second existing label;
- encoding, by the encoder, the first data item into a first latent vector, and encoding, by the encoder, the second data item into a second latent vector;
- extrapolating, from the first latent vector and the second latent vector, an extrapolated latent vector;
- extrapolating, from the first label and the second label, an extrapolated label; and
- providing the extrapolated latent vector and the extrapolated label to the decoder which decodes the extrapolated latent vector based on the extrapolated label.

19. The method of clause 18, wherein the extrapolating of the latent vectors and the extrapolating of the labels are both performed based on a same extrapolation weight.

20. The method of clause 18, wherein the decoding generates a third data item, and wherein the method further comprises updating the extrapolated label based on the third data item.

BRIEF DESCRIPTION OF THE DRAWINGS

FIG. 1 illustrates an example of coverage in which data is distributed in a database (DB) built according to one or more embodiments.
FIG. 2 illustrates an example of building a DB based on extrapolation and interpolation, according to one or more embodiments.
FIG. 3 illustrates an example of generating a new dataset based on extrapolation, according to one or more embodiments.
FIG. 4 illustrates an example of augmenting a dataset based on application of an extrapolation weight, according to one or more embodiments.
FIG. 5 illustrates an example of adjusting an augmented dataset, according to one or more embodiments.
FIG. 6 illustrates an example of training a new prediction model based on a newly constructed DB, according to one or more embodiments.
FIG. 7 illustrates an example configuration of an electronic device, according to one or more embodiments.
FIG. 8 illustrates an example configuration of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.
The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.
The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

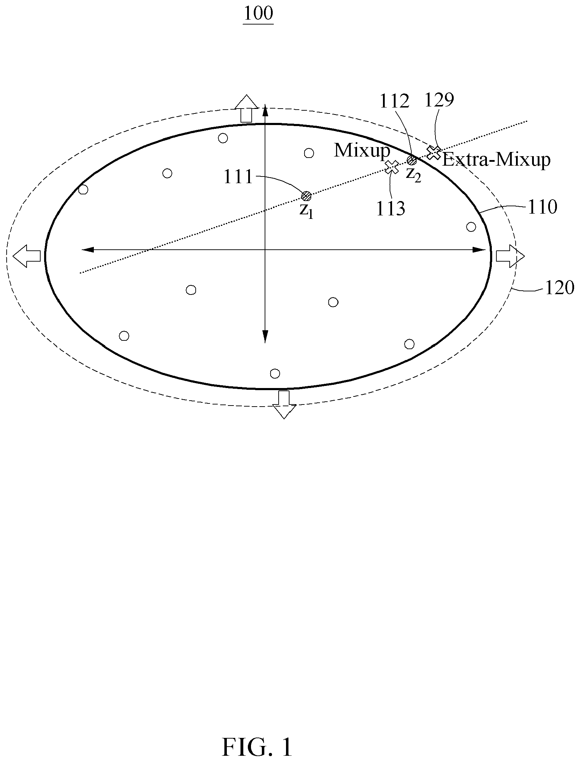

FIG. 1 illustrates an example of coverage in which data is distributed in a database (DB) built according to one or more embodiments.

A dataset may comprise an input data item (target data) paired with one or more respective labels (condition data). For example, a target data item may represent a molecular structure and may be paired with a corresponding label representing physical properties of the molecular structure (e.g., melting point or boiling point). The dataset may further include latent data corresponding to the target data and the condition data (the latent data is information hidden within the dataset). A DB may include a group of datasets. An electronic device may build a new (or updated) DB by interpolating or extrapolating a dataset of an existing DB to generate a new dataset. The new (or updated) DB may include the dataset of the existing DB and dataset extrapolated/interpolated therefrom. Such a new DB may be used for improved training of a prediction model (e.g., a neural network) that maps the target data to the conditional data.

The term "new", as used herein with respect to a DB, does not require an entire new instance of a DB. Rather, the term means that the DB is "new" in the sense that there is a DB that has new data relative to the prior/existing DB. Thus, a "new" DB also refers to an "updated" DB. Also, the term "database" only means a collection of datasets and does not imply the presence of a full-blown database engine or the like. Moreover, as used herein, "target" generally refers to data in a form inputtable to a model (e.g., a prediction model and/or a conditional generative model), and "condition" (depending on context) refers to an output predicted by the model based on a corresponding item of target data inputted to the model. In other words, "condition" and "target" generally refer, respectively, to an inference output of a model (e.g., a predicted label) and a corresponding input from which the inference is made (e.g., a feature vector, a molecular structure, an image, etc.).

A new dataset may be generated from an existing dataset using mixup-based data auto-generation techniques. Interpolation-based mixup data generation may include generating new data items (and labels thereof) interpolated from respectively corresponding pairings of data items (and labels thereof) in an existing dataset. A new data item and label thereof may be generated by applying a linearly weighted sum to a pairing of existing data items (e.g., $x1$ and $x2$), and linearly applying a weighted sum to labels corresponding to the existing data items (e.g., $x1$'s label $y1$ and $x2$'s label $y2$), and the interpolation may be applied to a data item and its label in the same way (e.g., with the same interpolation weights). As discussed below, interpolation (and extrapolation, also discussed below) can also be applied to latent data.

The interpolation-based mixup data generation described above may be mainly used in a DB having labels that are labels of respective discrete classes. For example, in a DB in which a label for dog images is (1,0) and a label for cat images is (0,1), when a dog image and a cat image are mixed up with the same weight, a label of mixed data obtained by the mixing up may have a value of (0.5, 0.5). Images obtained by capturing animals in the real world may be classified into either cats or dogs only, discretely, so labels generated based on mixup may have an unrealistic meaning, as in the example above (e.g., a half-cat half-dog label). The data generated based on the mixup may be unrealistic pseudo-data but such data can nonetheless be used for improving the performance of a prediction model (e.g., a classifier) with respect to realistic data (e.g., by providing new training data).

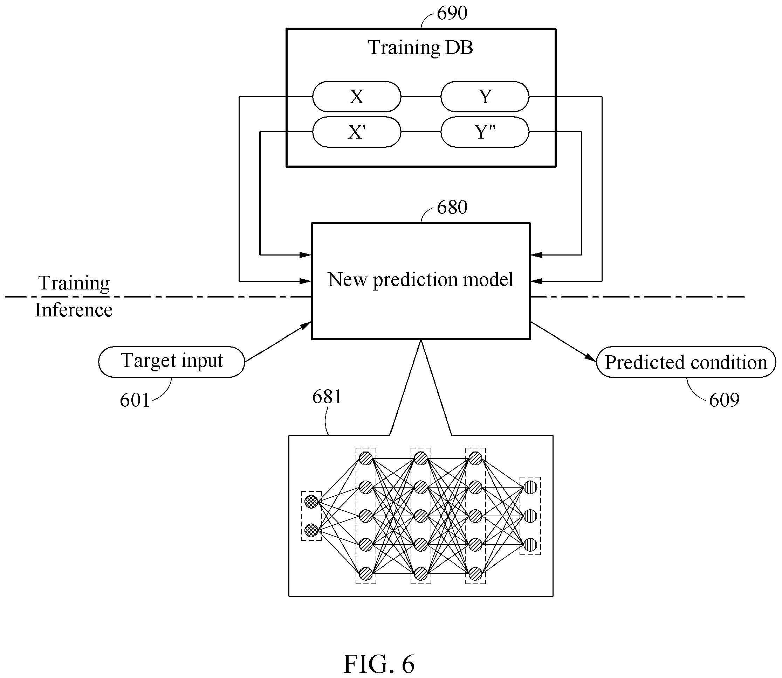

A prediction model whose performance is to be improved by training with auto-generated training data (e.g., data generated with mixup techniques) may be a machine learning model, which is a model designed and trained to output a label predicted with respect to a target input. The machine learning model may include, as non-limiting examples, a neural network. The neural network may include, for example, a deep neural network (DNN), a fully connected network (FCN), a deep convolutional network, a recurrent neural network (RNN), or the like. The neural network may perform tasks such as the prediction of physical properties of a molecular structure, object classification, object recognition, voice recognition, image recognition, or the like by mapping input data and output data that are in a nonlinear relationship, based on deep learning. In deep learning, supervised or unsupervised learning may be used to configure the neural network to map the input data and the output data. An example prediction model is described in detail with reference to FIG. 6.

According to some embodiments, the electronic device may auto-generate a new dataset based on extrapolation from an existing dataset. In comparison to the interpolation-based mixup techniques described above, data generated based on extrapolation and based on a generative model (e.g., a decoder of a conditional generative model such as a variational autoencoder (VAE)) may have realistic values in a combinatorial space. A combinatorial space is a space in which target data (target/input data items) and condition data (e.g., labels) follow given constraints or rules (e.g., the laws of physics, the laws of chemistry, etc.). A combinatorial space may represent possible combinations of discrete integers/symbols, for example. For example, when 50,000 words are given for a task of forming a four-word sentence, the number of possible combinations (four-word sentences) in the combinatorial space is (50,000 words) $\times$ (50,000 words) $\times$ (50,000 words) $\times$ (50,000 words). The target data may be data including information that is a target of prediction, which may include, for example, an image (e.g., an image including an object such as a person, an animal, or a thing), a text, a sound (e.g., a human voice), or a molecular structure (a representation of, e.g., a sequence of types of atoms/molecules, a compound, a solution, etc.). The condition data may be data representing, for example, an attribute (e.g., an age of a person) of the target data, a physical property (e.g., a physical property of molecules), or classification (e.g., a type of an animal), which may be predicted for corresponding target data. As an example of a combinatorial space, the electronic device may generate, from one or more existing datasets, a new dataset with new molecular structures having more realistic estimated physical properties. The electronic device may generate a new dataset that even includes realistic out-of-distribution (OOD) data. In some embodiments, target data described herein may be represented in the combinatorial space, and the condition data described herein may be in the form of a real number (which may be represented as a floating point value) or a class.

In addition, a prediction model trained using extrapolation-based datasets may have a high level of accuracy even for a task in which labels have values in a continuous range (i.e., continuous labels). An example of a continuous range label is a label that has a range of possible real number values. The electronic device may apply extrapolation to latent data corresponding to target data of a dataset. The latent data may include a latent vector to which the target data is mapped; i.e., the latent vector may be in a latent space (e.g., a manifold space). Each element of the latent vector may be a continuous real value. Thus, the electronic device may generate a new dataset by applying extrapolation to an existing dataset in which the latent vector corresponding to the target data is a vector of real numbers and in which the condition data are also real numbers (the real numbers are typically represented as floating points). The electronic device may generate a more realistic dataset for data represented in a combinatorial space such as a molecular structure space (e.g., a space of possible combinations of molecules/atoms). The newly generated dataset may be used as training data for improving the performance of a machine learning model (e.g. a prediction model) configured, for example, to predict physical properties of molecular structures such as pharmaceutical molecules, industrial materials, etc.

In a data space 100 of a DB illustrated in FIG. 1, latent vectors ($Z_1$, $Z_2$) 111 and 112 are data items in the latent space of an existing dataset of the DB. The latent vectors ($Z_1$, $Z_2$) 111 and 112 may be generated by encoding respectively corresponding target data items (encoding is described below). For example, target vector $X_1$ may be encoded to latent vector $Z_1$ and target vector $X_2$ encoded to latent vector $Z_1$. Data 113 may be generated based on interpolation of the latent vectors ($Z_1$, $Z_2$) 111 and 112 and data 129 may be generated based on extrapolation from the latent vectors ($Z_1$, $Z_2$) 111 and 112. The data 113 generated based on interpolation may not be out of existing coverage 110 of an existing DB (i.e., may be in-distribution with respect to the existing DB), while the data 129 generated based on extrapolation may be OOD with respect to the existing coverage 110. Thus, new coverage 120 including the data 129 that is newly generated may be expanded beyond the existing coverage 110. Although the example above uses the same latent vectors for both interpolation and extrapolation, the same latent vector pair may not necessarily be used for both interpolation and extrapolation (some latent vector pairs may be used only for interpolation, some may be used only for extrapolation, and/or some/all latent vector pairs may be used for both). In some implementations, a new dataset may include only extrapolated data. Moreover, as discussed further below, in some embodiments, latent vectors extrapolated-from may come from different respective datasets. Of note is extrapolating from any pair of latent vectors to obtain an extrapolated latent vector.

Furthermore, an extrapolation-based dataset may also be generated to have evenly distributed coverage (possibly for multiple labels) outside of the coverage of an existing DB, which may reduce an overall imbalance in labels of a DB (e.g., a label may have a less disproportionate number of data items when extrapolated data items are added). Coverage (or distribution) of a DB may be a boundary and/or limit of any space that is represented by the DB and may indicate, for example, a range and/or area in which datasets in the DB are distributed, covered, and/or located. The electronic device may build a new DB by generating a realistic new dataset from an existing dataset based on extrapolation techniques described below. Coverage of the new (or updated) DB may be expanded beyond the coverage of an existing DB.

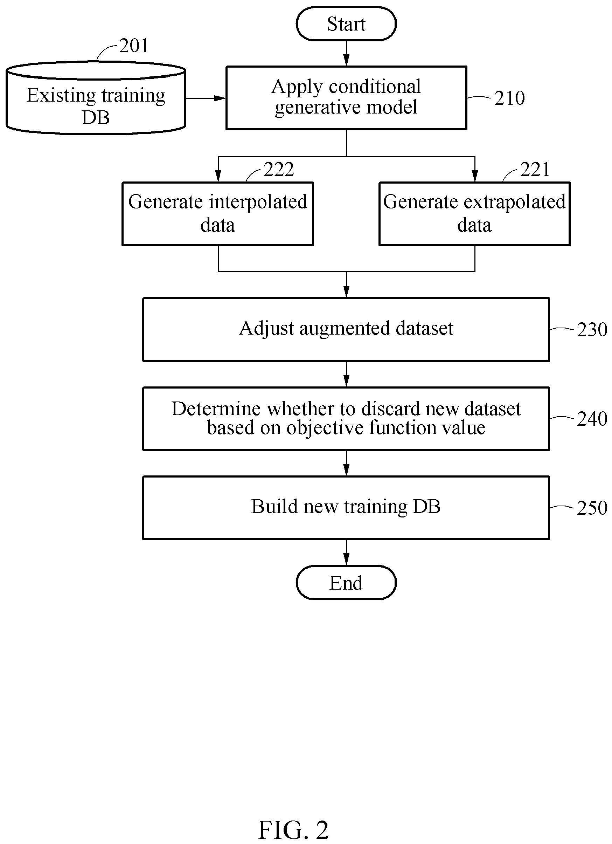

FIG. 2 illustrates an example of building a DB based on extrapolation and interpolation, according to one or more embodiments.

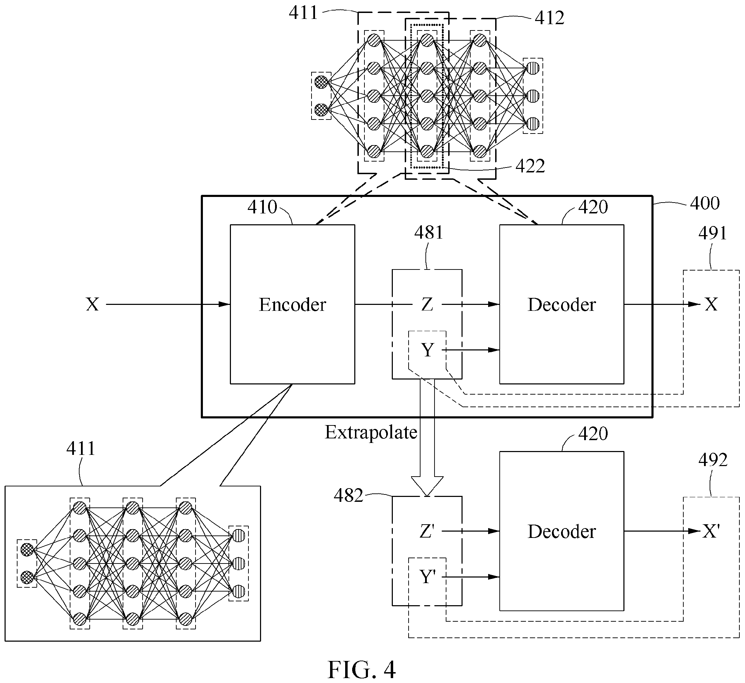

In operation 210, an electronic device may apply a conditional generative model to a dataset based on an existing training DB 201. Details of a conditional generative model are provided with reference to FIG. 4. The conditional generative model may be, for example, a machine learning-based model (e.g., a decoder) designed and trained to output target data (e.g., X) from latent data (e.g., Z) and condition data (e.g., a label Y for the latent data Z) of an existing dataset based on the existing training DB 201 (X, Z, Y, and X', Z', Y' are representatives). In other words, the conditional generative model may be initially trained by the existing DB. The electronic device may apply, to the conditional generative model described above, data (e.g., augmented latent data item Z', and a corresponding augmented label Y') obtained by augmenting (e.g., by extrapolating) the latent data and the condition data of the existing dataset to obtain corresponding target data (e.g., X'). The augmentation of the latent data and the condition data may be performed based on interpolation and/or extrapolation (augmentation may depend on interpolation and/or extrapolation). A dataset corresponding to the augmented latent data (e.g., Z'), the augmented condition data (e.g., Y'), and including the augmented target data (e.g., X') may be a pseudo-dataset, which is generated from the existing dataset by interpolation and/or extrapolation, as described above.

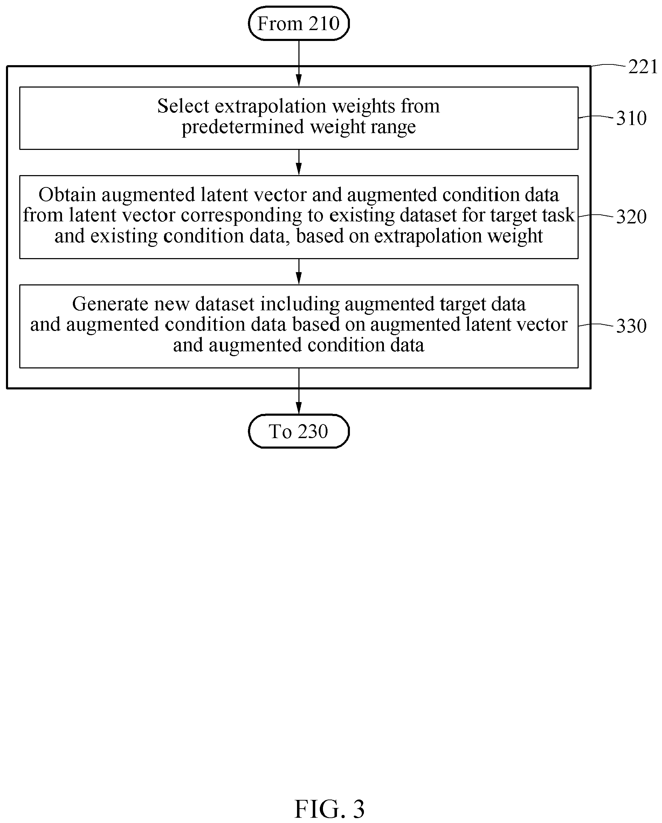

For example, in operation 221, the electronic device may generate extrapolated data. The electronic device may augment each dataset (based on an extrapolation weight) among existing datasets in an existing DB. For each existing dataset, the electronic device may determine, as an augmented latent vector, a weighted sum calculated (based on the extrapolation weight) from latent vectors of the dataset. Similarly, for each dataset, the electronic device may determine, as augmented condition data, a weighted sum calculated (based on the extrapolation weight) from condition data of the existing dataset. As described above with reference to FIG. 1, the electronic device may build a DB of training data having expanded distribution or coverage using data augmented based on extrapolation. Augmentation based on an extrapolation weight may also be referred to herein as extra-mixup. As described above with reference to FIG. 1, the electronic device may augment condition data (e.g., physical property values in the form of floating point numbers, for molecules) and generate new target data that is likely to have the augmented condition data based on the conditional generative model. A DB having coverage expanded externally from existing data coverage may thereby be built. In addition, imbalance in a distribution of labels in the form of floating point numbers/values may be reduced and/or relieved by the addition of augmented labels. Aspects of extrapolation-based dataset generation (e.g., operation 221 in FIG. 2) are described in greater detail with reference to FIG. 3.

In operation 222, the electronic device may generate interpolated data. For example, the electronic device may augment a dataset (based on an interpolation weight) from existing datasets of an existing DB. The electronic device may determine, as augmented latent data, a weighted sum calculated (based on the interpolation weight) from the latent vectors of an existing dataset. The electronic device may determine, as augmented condition data, a weighted sum calculated (based on the interpolation weight) from pieces of condition data of the existing dataset. Such interpolation-based augmentation may be performed for each dataset int the existing DB. The augmentation based on the interpolation weight may also be referred to herein as intra-mixup (to be distinguished from the extra-mixup mentioned above). The electronic device may obtain the augmented target data by applying the conditional generative model to the augmented condition data and the augmented latent data.

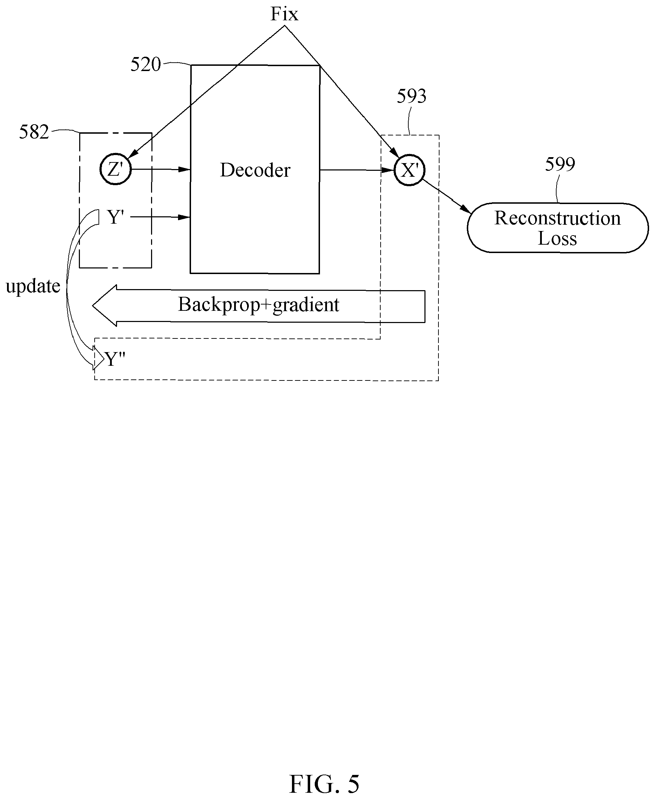

In operation 230, the electronic device may adjust the augmented dataset. For example, the electronic device may correct the augmented condition data, i.e., the condition data initially generated based on the conditional generative model (e.g., by a decoder thereof). The electronic device may thus be able to obtain more accurate labels for the augmented target data. Correction or refinement of augmented condition data is described in greater detail with reference to FIG. 5.

In operation 240, the electronic device may determine whether to retain or discard a new dataset based on an objective function value. The electronic device may calculate the objective function value for the new dataset and determine whether to add the new dataset to a DB based on the calculated objective function value. The electronic device may refine the DB by discarding the new dataset if the objective function value thereof is out of a threshold range.

In operation 250, the electronic device may build a new training DB. The electronic device may then train a prediction model using a finally obtained training DB (an existing prediction model may be updated, or a new prediction may be trained from scratch). For example, considering that there may be a number of existing datasets and there may be a number of new training datasets, the electronic device may set a ratio of (i) the number existing training datasets to (ii) the number of the new datasets (e.g., pseudo-data) in the new training DB to range from 10:1 up to 5: 1, but examples are not limited thereto.

For reference, a machine learning model for augmenting a dataset (e.g., a conditional VAE (cVAE) including an encoder and a decoder, description of which is available elsewhere) and a machine learning model (e.g., a prediction model) trained using the augmented dataset is described herein. For example, the cVAE and the conditional generative model for augmenting a dataset are described with reference to FIGS. 3 through 5. In addition, the prediction model trained using a dataset newly generated as described with reference to FIGS. 3 through 5 are described below with reference to FIG. 6.

FIG. 3 illustrates an example of generating a new dataset based on extrapolation, according to one or more embodiments.

In operation 310, an electronic device may select extrapolation weights from a predetermined weight range. For example, the electronic device may select the extrapolation weights from the weight range including at least one of a range less than zero (0) (e.g., a range between -0.5 or more and less than 0) or a range greater than a reference value (e.g., a range between more than 1 and 1.5 or less). For example, the reference value may be 1, and the weight range may be between -0.5 or more and 1.5 or less. As described below, a sum of extrapolation weights applied to condition data or a sum of extrapolation weights applied to latent data may be the reference value.

In operation 320, the electronic device may obtain an augmented latent vector and augmented condition data that are augmented (based on an extrapolation weight) from (i) a latent vector corresponding to an existing dataset for a target task and (ii) existing condition data. The target task may be a task performed by a machine learning model (e.g., a prediction model as mentioned above), which may include inferring desired information for a given input. The target task may include, as non-limiting examples, image classification (e.g., classification of animal types), image recognition (e.g., identifying an age of a person), image restoration (e.g., generating a human face of a specific age), prediction of physical properties of a molecular structure, text classification, text recognition, sound classification, and sound recognition (e.g., voice recognition), or the like.

For example, the electronic device may determine, as the augmented latent vector and the augmented condition data, a weighted sum (e.g., an extrapolated weighted sum) obtained by applying the extrapolation weight to a plurality of latent vectors and a weighted sum obtained by applying the extrapolation weight to a plurality of pieces of condition data, respectively. The extrapolation weighted sum is described below with reference to FIG. 4.

In operation 330, the electronic device may generate a new dataset including augmented target data and the augmented condition data, which are generated from the augmented latent vector and the augmented condition data based on a conditional generative model. The conditional generative model may be a machine learning-based model configured to reconstruct target data from latent vectors. The conditional generative model may be, for example, a decoder model in a cVAE structure. For example, the electronic device may obtain the augmented target data by inputting the augmented latent vector and the augmented condition data to the conditional generative model which infers therefrom the augmented target data (e.g., a cVAE decoder may receive and decode the augmented latent vector and the augmented condition data (e.g., augmented label data) to predict the augmented target data). The new dataset including the augmented target data and the augmented condition data may be used to train a prediction model, and the thus-trained prediction model may be improved in various ways, for example, greater generalization, reduced over-fitting, improved accuracy, or ability to infer out-of-distribution data, etc. The augmented target data and augmented condition data may have other uses and is itself practical for auto-generating data, regardless of how the auto-generated data is used.

FIG. 4 illustrates an example of augmenting a dataset based on application of an extrapolation weight, according to one or more embodiments.

According to some embodiments, an electronic device may augment a dataset using a machine learning-based model (or a machine learning model). As an example of the machine learning-based model, a VAE model 400 may be a neural network 411 as partially illustrated in FIG. 4. In practice, part of the neural network 411 may be an encoder 410. Another part of the neural network 412 may be a decoder 420 (two instances of the decoder 420 are shown in FIG. 4, which reflects different uses of the same decoder 420 as described further below). The encoder 410 and the decoder 420 may share a latent layer 422. That is, the encoder 410 and the decoder 420 (e.g., a conditional generative model) of the VAE model 400 may be respective parts of the neural network 411. The neural network 411 may include an input layer, the latent layer 422, and an output layer. The input layer, the latent layer, and the output layer may each include a respective plurality of nodes. For example, the encoder 410 may encode an input vector (e.g., X) to a latent vector (e.g., Z) which will usually have lower dimensionality than the input vector. A label (e.g., Y) may be provided as an input to the latent layer 422, and in combination with the encoded latent vector (Z), both function as input to the decoder 420 portion of the VAE model 400. The decoder 420 then decodes the latent vector (Z) based on the label (Y) received at the latent layer 422, i.e., the decoder 420 predicts/reconstructs the input vector (X). The predicted/reconstructed X will generally differ from the original input vector (input X) but will generally have the same dimensionality as the original input vector (a higher dimensionality than the latent vector (Z)).

Although FIG. 4 shows three hidden layers, there may be other numbers of hidden layers, and generally, one hidden layer may serve as a transition layer (or bottleneck) linking the encoder 410 and the decoder 420 and may be configured to directly receive external input (e.g., an extrapolated latent vector and an extrapolated label). That is, although the neural network 411 is illustrated in FIG. 4 as including an input layer for receiving input data, data may also be input directly to the decoder 420 via the hidden layer 422 (which can function as an input layer for the decoder 420). Generally, an input to the hidden layer may be (i) a vector in the latent data space of the hidden layer 422, and/or (ii) a label. Nodes of layers, excluding the output layer, in the neural network 411 may be connected to nodes of a subsequent layer through links for transmitting an output signal. The number of links may correspond to the number of nodes included in the subsequent layer. The links may be referred to as connections or synapses. To each node included in the hidden layer, an output of an activation function related to weighted inputs of nodes included in a preceding layer may be input. The weighted inputs may be obtained by multiplying, by a synaptic weight, an input of the nodes included in the previous layer. The activation function may be, for example, a sigmoid, a hyperbolic tangent (tanh), or a rectified linear unit (ReLU), by which nonlinearity may be provided in the neural network 411. To each node included in the output layer, the weighted inputs of the nodes included in the previous layer may be input. While this typical neural network structure may be used, any suitable type of neural network structure may be used.

When the neural network 411 has sufficiently large width and depth, it may have a sufficient capacity to implement a function. When the neural network 411 learns a sufficient amount of training data through a desirable training process, recognition performance may be optimized.

The electronic device may convert existing target data X into a latent vector, e.g., by encoding the target data X to an existing latent vector Z. For example, the electronic device may obtain existing latent vectors Z from items of existing target data X of an existing dataset, and may do so by having an encoder model portion of the conditional generative model (e.g., the encoder 410) encode the existing target data items (X) into the existing latent vectors Z (here, "existing" indicates association with existing data as opposed to augmented data). As illustrated in FIG. 4, the decoder 420 may be a model trained to output predicted existing target data X from an existing latent vector Z and existing condition data Y; the trained decoder 420 can make inferences (decode) a latent vector and condition data (label data) received from either the encoder 410 or as an external input directly inputted to the decoder 420. An existing dataset 491 may include a pair of the existing condition data Y and the existing target data X (X and Y are representative of multiple data-condition pairs in the existing dataset 492).

The electronic device may obtain a pair 482 of an augmented latent vector Z' and augmented condition data Y' from a pair 481 of the existing latent vector Z and the existing condition data Y. For example, the electronic device may apply the same extrapolation weight to each latent vector Z among two or more existing latent vectors and corresponding existing condition data Y. The electronic device may obtain the augmented latent vector Z' through a weighted sum based on an extrapolation weight of the existing latent vectors Z as represented by Equation 1 below. Similarly, the electronic device may obtain the augmented condition data Y' through a weighted sum based on an extrapolation weight of the existing condition data Y as represented by Equation 2 below.

$$\text{Equation 1}$$
$$z' = (1.0 + \lambda)z_2 - \lambda z_1$$

$$\text{Equation 2}$$
$$y' = (1.0 + \lambda)y_2 - \lambda y_1$$

In Equation 1, $z_1$ and $z_2$ denote existing latent vectors, and z' denotes an augmented latent vector (e.g., by extrapolation from $z_1$ and $z_1$). In Equation 2, $y_1$ and $y_2$ denote existing condition data (e.g., label data), and y' denotes augmented condition data. $z_1$ and $y_1$ denote a latent vector and condition data of a first dataset, and $z_2$ and $y_2$ denote a latent vector and condition data of a second dataset. In Equations 1 and 2, $(1.0+\lambda)$ and $-\lambda$ denote extrapolation weights (alternatively, $\lambda$ may be considered to be a weight). In addition, in Equations 1 and 2, a reference value may be 1, and a sum of the extrapolation weights $(1.0+\lambda)$ and $-\lambda$ may be reference value 1. In some embodiments, a given existing latent vector pair (e.g., $z_1$ and $z_2$) and corresponding existing condition data (e.g., $y_1$ and $y_2$) may be extrapolated-from multiple times using different values of $\lambda$ to generate multiple augmented latent vectors paired with respective and augmented condition data.

For example, under the assumption that there is a linear correlation between the existing latent vector Z and the existing condition data Y, the same weight may be applied to the existing latent vector Z and the existing condition data Y corresponding to the same set, in Equations 1 and 2 above. For example, in Equations 1 and 2 above, the latent vector $z_1$ and the condition data $y_1$ of the first dataset may be multiplied by $-\lambda$ as the same extrapolation weight, and the latent vector $z_2$ and condition data $y_2$ of the second dataset may be multiplied by $1.0+\lambda$ as the same extrapolation weight. That is, when a relationship between the existing latent vector Z and the existing condition data Y is modeled as a nonlinear relationship rather than a linear relationship, different extrapolation weights may be applied to the latent vector and the condition data of the same dataset. An example of augmenting a latent vector and condition data by the same extrapolation weight based on linear relationship modeling is described with reference to FIG. 4. However, the latent vector and the condition data may actually have a nonlinear relationship, and an error may thereby occur due to the assumption of linearity when extrapolating. Correcting such an error is described with reference to FIG. 5.

The electronic device may generate predicted augmented target data X' from the augmented latent vector Z' and the augmented condition data Y' using the conditional generative model (e.g., the decoder 420). For example, the electronic device may obtain the predicted augmented target data X' by applying the decoder 420 to the augmented latent vector Z' and the augmented condition data Y'. The electronic device may determine, as a new dataset 492, the augmented target data X' paired with the augmented condition data Y'. The new dataset 492 may be used to train a new prediction model.

Thus, the electronic device may generate the predicted augmented target data X' and the augmented condition data Y' that extend data distribution beyond the coverage of the existing target data X and the existing condition data Y. Interpolation may enable the generation of pseudo-data corresponding only to the inside (i.e., intra) of existing datasets, while extrapolation may enable the generation of pseudo-data outside of coverage of the existing datasets, that is, extrapolation may be used to auto-generate OOD training data.

For example, the data augmentation described above may be applied to a DB storing molecular structure representations (e.g., molecular domain data). In an existing DB, target data may include data related to actual molecular structures (i.e., a target data item may be a representation of the structure of a known molecule, compound, solution, etc.), and condition data (e.g., labels of molecular structure data items) may indicate various physical property values measured and/or observed through actual experiments for the represented molecular structures. In other words, the existing DB may represent ground truth molecular data or the like. The electronic device may sample datasets in a plurality of datasets (e.g., pairs of target data and condition data) from the existing DB. An example of sampling two datasets is described above with reference to Equations 1 and 2. The electronic device may apply an extrapolation weight as a ratio for mixing the two datasets. For example, there is no limit on a range of values of $\lambda$ in Equations 1 and 2, but it may be practical for $\lambda$ to be $-1.5 < \lambda < 0.5$. However, the extrapolation weight may be more than -0.5 and less than 1.5, and examples are not limited thereto. As a given amount of existing data in an existing dataset increases, a settable range of $\lambda$ may increase. In addition, when there is a smaller amount of existing data in an existing dataset, the value of $\lambda$ may be set in a narrower range. As the value of $\lambda$ increases, new pseudo-data located farther from the space of the existing may be generated, but the accuracy of corresponding condition data may be proportionally reduced.

In terms of molecular structure and physical properties of molecules, coverage of a molecular DB may also be expanded by the extrapolation-based augmentation described above. For example, under the assumption that a minimum value of a spectrum area of a molecular structure in a known molecular DB is 0.18, pseudo-data that is likely to have 0.17 in a combinatorial space may be generated based on the extrapolation described above.

Through methods described above, augmentation (e.g., mixup-based auto-generation) may be performed not only inside an existing data distribution of an existing molecular DB, for example, but also outside the existing data distribution. Also, for labels (e.g., physical properties) of molecular structures, data of a new molecular structure having physical property values (e.g., continuously variable labels) outside of an existing range (typically, near a minimum or maximum value of the physical properties covered by the existing DB) may be generated. Thus, a phenomenon in which condition data values (e.g., labels) concentrate on an average value may be reduced, and label distribution imbalance may be reduced or relieved in the new/augmented DB.

Although an example of sampling and extrapolating two datasets is described with reference to FIG. 4 for the convenience of description, examples are not limited thereto and three or more datasets may be sampled from an existing DB and used for extrapolation. Even in this case, a sum of extrapolation weights may preferentially be a reference value (e.g., 1), and the extrapolation weights may be determined individually from within a predetermined range (e.g., - 0.5 or more to 1.5 or less).

FIG. 5 illustrates an example of adjusting an augmented dataset, according to one or more embodiments.

As noted above, linear extrapolation can lead to inaccuracy in the augmented condition data (relative to initially predicted augmented target data). Therefore, in some embodiments, an electronic device may update augmented condition data Y' based on an augmented latent vector Z' and augmented target data X'. For example, the electronic device may fix (not change) the augmented latent vector Z' and the augmented target data X'. The electronic device may update the augmented condition data Y' to increase a likelihood that a conditional generative model (e.g., a decoder 520) outputs (predicts) the augmented target data X' from the augmented latent vector Z' and condition data (here, "conditional" refers to the fact that condition/label data may be inputted to the decoder in combination with a latent vector to impose the condition/label on the generation of target data from the latent vector). For example, the electronic device may update the augmented condition data Y' to increase the probability that the augmented target data X' (generated by the decoder 520 from the augmented latent vector Z' and the condition data Y') matches a theoretical ground truth. For example, the electronic device may perform a gradient descent on the condition data Y' such that the likelihood based on Equation 3 increases.

Equation 3

$$p_\theta(x'|z', y')$$

In Equation 3, θ denotes a parameter (e.g., a connection weight) of the decoder 520 (e.g., the decoder 420 of FIG. 4). Equation 3 represents a likelihood that target data is to be output for a pair 582 of a given latent vector and given condition data, from the parameter of the decoder 520 that is pre-trained. The electronic device may gradually adjust the condition data through the gradient descent technique with the latent vector Z' and the target data X' fixed, and may update the condition data to updated condition data Y" with an increased maximum likelihood. The electronic device may repeatedly update the condition data using the gradient descent. However, the updating is not limited to increasing the maximum likelihood and the electronic device may use other techniques to update the condition data to decrease a reconstruction loss 599.

As described above with reference to FIG. 4, the target data X' and the condition data Y' that are augmented based on extrapolation may include some mismatch elements. That is, the condition data may indicate an inaccurate label. Referring to FIG. 5, updating condition data using knowledge (e.g., parameters) of the decoder 520 that has already been trained may improve label accuracy in a combinatorial space.

The electronic device may discard the augmented target data X' and the augmented condition data Y' when an objective function value for the augmented target data X' is out of a threshold range. For example, the electronic device may input the augmented latent vector Z' and the updated augmented condition data Y" to the decoder 520 as described above. The electronic device may calculate the reconstruction loss 599 for the target data output from the decoder 520. The reconstruction loss 599 may include, for example, a cross-entropy loss, but examples are not limited thereto. The electronic device may determine, based on the reconstruction loss 599, whether to retain, for a new dataset, a pair 593 of newly generated condition data and target data. For example, the electronic device may discard and/or delete the pair 593 with respect to the new dataset 593 when the corresponding reconstruction loss 599 exceeds a threshold value. Examples are not limited to the foregoing and the electronic device may calculate an objective function value (e.g., the reconstruction loss 599) for newly generated datasets, and delete datasets having a loss value included in a predetermined upper (or lower) ratio. This is because there is appreciable uncertainty in using such a dataset for training a prediction model (described below with reference to FIG. 6). For example, when 1,000 new datasets 593 are generated for a molecular structure through interpolation and extrapolation and approximately 10% of these have a substantial reconstruction loss 599 and are therefore deleted, new pseudo-data of higher quality may be obtained. That is, for the purpose of training a prediction model, the quality of newly generated datasets for molecular structure may be improved. In an organic molecular DB, which is referred to as ZINC, discarding some datasets as described above may increase the accuracy of generated new molecule labels approximately by 5% to 15%, relatively, which may result in commensurate improvement of prediction model training. It should be noted that the quality of the new auto-generated datasets is itself beneficial and such high-quality new datasets may have applications beyond use as training data. For example, a new dataset may inherently contain information on a new (previously undiscovered) molecular structure.

Thus, the electronic device may improve the reliability of a newly built DB and the performance of a prediction model to be trained using this DB by automatically screening a newly generated dataset 593 as described above.

A dataset augmented based on stable extrapolation as discussed with reference to FIGS. 4 and 5 may include a new candidate molecular structure and corresponding physical properties thereof (e.g., a molecular weight, a boiling point, a melting amount, or the like as physical characteristics of the molecular structure). Thus, clues may be provided for a search for a candidate molecule having physical properties of an unknown area and/or coverage. For example, information on a candidate molecular structure for a search near a minimum or maximum value of physical property values in an existing DB may be provided.

For example, the electronic device may predict new target data of a new molecular structure having new physical properties from existing target data of an existing molecular structure. That is, the electronic device may search for the new molecular structure having the new physical properties that were not known in the existing DB. For example, when augmenting a molecular structure for a display material, the electronic device may generate a new candidate molecular structure that may potentially have a brightness of 90 to 100, even if the maximum brightness in an existing DB is only 80, for example.

FIG. 6 illustrates an example of training a prediction model based on a newly constructed DB, according to one or more embodiments.

According to some embodiments, the electronic device may train the prediction model using a dataset including augmented target data and augmented condition data. The prediction model may be a machine learning-based model (e.g., a neural network) configured to predict condition data from target data. For example, the electronic device may train a new prediction model 680 based on a pair of existing target data X and existing condition data Y in a training DB 690 and a pair of target data X' and condition data Y" that are augmented by extrapolation and/or interpolation. The new prediction model 680 may include a neural network 681. An example of basic structure of the neural network 681 is described above with reference to FIG. 4.

The electronic device may calculate an objective function value between (i) a temporary condition output (that is generated when the target data of the dataset included in the training DB 690 is input to the new prediction model 680) and (ii) given condition data. The electronic device may update parameters of the new prediction model 680 such that the objective function value decreases (or increases). The electronic device may repeatedly update the parameters until the objective function value reaches (e.g., is minimized or maximized) or converges on a threshold range or meets a predetermined number of repetitions of training.

According to an example embodiment, the electronic device may generate a predicted condition 609 from a target input 601 using the new prediction model 680 for which training is completed. For example, when the target input 601 is a representation of a molecular structure, the electronic device may infer physical properties of the represented molecular structure using the trained new prediction model 680. For example, the electronic device may predict, as a real value (e.g., 150.5 degrees of Celsius), a boiling point of the molecular structure of the target input 601.

The electronic device may improve the performance of the prediction model (e.g., a physical property prediction model) using the training DB 690. For example, the electronic device may improve the accuracy of a dataset included in an OOD from 0.774 to 0.806 by using the training DB 690 related to an organic light-emitting diode (OLED).

Although a search for a new molecular structure and prediction of physical properties of the molecular structure are described herein as an example of a task of the prediction model, examples are not limited thereto. Extrapolation-based data augmentation techniques described above may also be used for tasks such as text classification, image recognition, image restoration, and the like. For example, an existing DB may include only face image data of people aged 10 to 50. In this example, the electronic device may train the cVAE model 400 described above in FIG. 4 using the existing DB. The electronic device may obtain latent vectors for the images in the existing DB using an encoder of a model trained based on the existing DB. The electronic device may obtain an augmented dataset that is augmented from existing latent vectors and existing condition data (e.g., ages of the people in corresponding images) based on extrapolation. The electronic device may obtain augmented target data (e.g., face images of people aged under 10 or over 50) by inputting, to a decoder, an augmented latent vector and augmented condition data (e.g., ages under 10 or over 50). The electronic device may generate a new dataset that is out of coverage (e.g., includes images of people with ages other than 10 to 50) of the existing DB through repetitions. The electronic device may train the new prediction model 680 (e.g., a regression model) using the training DB 690 including the newly obtained dataset. The electronic device may predict a condition (e.g., ages of 8 and 53), even for face images of people exceeding the coverage of the existing DB, through the new prediction model 680 configured to predict an age of a person's face in an image.

In addition, although examples where condition data has continuous real values (e.g., physical property values, ages, etc.) are described above with reference to FIGS. 1 through 6, examples are not limited thereto. The data augmentation techniques may also be applied to class classification (where the condition/label data have a finite set of discrete classes/values). For example, for a task of classifying an image into one of two classes (e.g. [dog, cat]), a dataset augmented based on interpolation may have a label in a defined range (e.g., 0 or more and 1 or less), such as, for example, [0.9, 0.1]. In this example, a dataset augmented based on extrapolation may have a label (e.g., [1.1, -0.1]) that exceeds the defined range. In the example, the augmented target data (indicated as X') may be pseudo-data including a connotation that it is not definitely a "cat" but is definitely a "dog." Additionally, through the adjustment of the condition data described above with reference to FIG. 5, the condition data [0.9, 0.1] may be finely adjusted to a value (e.g., [0.88, 0.12]) that improves the performance of a task. These numerical values are provided merely as an example.

Although the number of items of condition data Y and target data X and latent vectors Z that are included in each dataset is not described above with reference to FIGS. 1 to 6 for the convenience of description, target data X of each dataset may be paired with a plurality of items of condition data. For example, to target data of one molecular structure, the plurality of items of condition data representing respectively a plurality of physical properties (e.g., 10 or more physical properties) including a boiling point, a freezing point, a molecular weight, and a saturation may be mapped. The electronic device may predict a plurality of physical property values for the molecular structure at once, using the prediction model trained using training data described above.

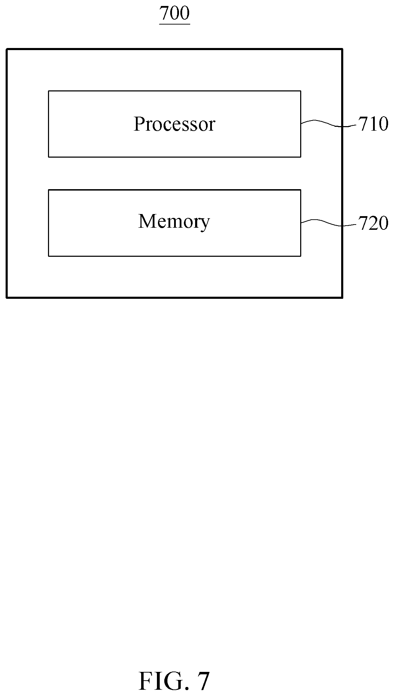

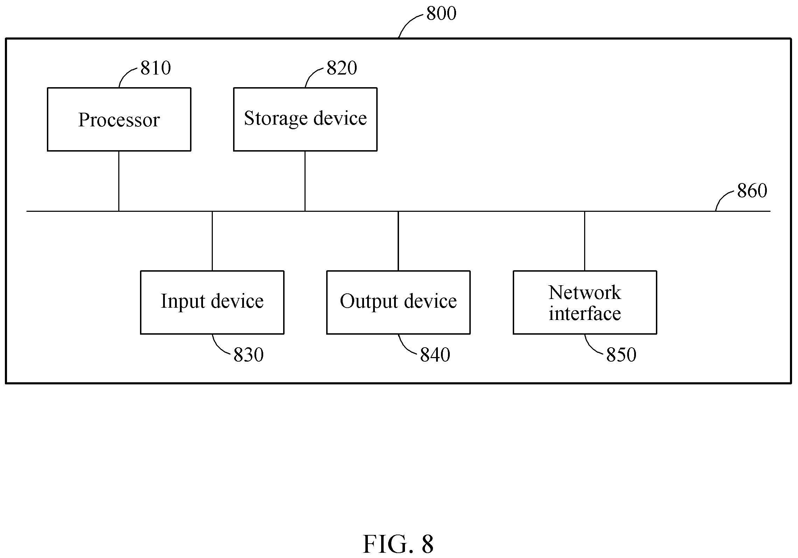

FIGS. 7 and 8 illustrate configurations of an electronic device, according to one or more embodiments.

According to an example embodiment, an electronic device 700 may include a processor 710 and a memory 720.

The memory 720 may store a machine learning-based conditional generative model (e.g., a neural network) configured to reconstruct target data from latent vectors. The memory 720 may store augmented datasets. For example, the memory 720 may store a first dataset including an input paired with an output, where the paring is based on an existing observation (e.g., measurement by experiments) of a target task. The memory 720 may also store a second dataset including an augmented input paired with an augmented output that is out of coverage of a data space defined by the first dataset. The second dataset may include the pair of the augmented input and the augmented output that are generated based on extrapolation performed on the first dataset.

The processor 710 may be electrically connected with the memory 720. The processor 710 may select extrapolation weights from a weight range including at least one of a range less than zero (0) or a range greater than a reference value. The processor 710 may obtain an augmented latent vector and augmented condition data that are augmented from a latent vector corresponding to an existing dataset for a target task and from existing condition data based on the extrapolation weights. The processor 710 may generate a new dataset including augmented target data and the augmented condition data based on the augmented latent vector and the augmented condition data. However, operations of the processor 710 are not limited to the operations described above, and the processor 710 may also perform the operations described above with reference to FIGS. 1 to 6.

Referring to FIG. 8, a computing device 800 may be a device configured to augment a dataset based on extrapolation techniques described above, train a prediction model using the augmented dataset, and perform inference using the trained prediction model. In an example embodiment, the computing device 800 may correspond to the electronic device 700 described above with reference to FIG. 7. The computing device 800 may be, for example, a smartphone, wearable device, a tablet computer, a netbook, a laptop, a desktop, or a personal digital assistant (PDA). The computing device 800 may include functions of the electronic device 700 of FIG. 7.

Referring to FIG. 8, the computing device 800 may include a processor 810, a storage device 820, an input device 830, an output device 840, and a network interface 850. The processor 810, the storage device 820, the input device 830, the output device 840, and the network interface 850 may communicate with one another via a communication bus 860.

The processor 810 may execute functions and instructions in the computing device 800. For example, the processor 810 may process instructions stored in the storage device 820. The processor 810 may perform one or more of the operations described above with reference to FIGS. 1 to 7.

The storage device 820 may stores information or data necessary for the execution of the processor 810. The storage device 820 may include a computer-readable storage medium or a computer-readable storage device. The storage device 820 is not a signal per se. The storage device 820 may store instructions to be executed by the processor 810 and may store related information while software or application is being executed by the processor 810.

The input device 830 may receive an input from a user through tactile, video, audio, or touch input. The input device 830 may include a keyboard, a mouse, a touchscreen, a microphone, or any other device configured to detect an input from the user and transmit the detected input.

The output device 840 may provide an output of the computing device 800 to the user through a visual, auditory, or tactile channel. The output device 840 may include, for example, a display, a touchscreen, a speaker, a vibration generator, or any other device configured to provide the output to the user. The network interface 850 may communicate with an external device via a wired or wireless network.

Although "the computing device" is used in the singular above, this is only a convenience. Various embodiments may be implemented on different architectures, combinations of computing devices, etc.

The computing apparatuses, the electronic devices, the processors, the memories, the displays, the information output system and hardware, the storage devices, and other apparatuses, devices, units, modules, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1. An electronic device, comprising:

    one or more processors;
    a memory storing instructions configured to, when executed by the one or more processors, cause the one or more processors to:

    implement a machine learning-based conditional generative model configured to reconstruct target data from latent vectors, the conditional generative model trained based on an existing dataset for a target task;
    determine an extrapolation weight;
    generate an augmented latent vector and augmented condition data by extrapolating, based on the extrapolation weight, from a latent vector corresponding to the existing dataset and from existing condition data corresponding to the existing dataset; and
    generate a new dataset comprising augmented target data generated by the conditional generative model based on the augmented condition data and based on the augmented latent vector.

2. The electronic device of claim 1, wherein the instructions are further configured to cause the one or more processors to:
    generate a plurality of existing latent vectors from a plurality of pieces of existing target data of the existing dataset based on an encoder model portion of the conditional generative model.

3. The electronic device of claim 2, wherein the instructions are further configured to cause the one or more processors to:

    apply the extrapolation weight to each of the existing latent vectors and corresponding existing condition data;
    generate the augmented latent vector through a weighted sum of an extrapolation weight of the existing latent vectors; and
    generate the augmented condition data through a weighted sum of an extrapolation weight of the existing condition data.

4. The electronic device of any one of the previous claims, wherein the augmented target data is out-of-distribution with respect to a data space defined by the existing dataset.

5. The electronic device of any one of the previous claims, wherein the instructions are further configured to cause the one or more processors to:

    update the augmented condition data based on the augmented latent vector and the augmented target data; and
    preferably, wherein the instructions are further configured to cause the one or more processors to:
    update the augmented condition data to increase a likelihood that the augmented target data is to be output from the augmented latent vector and condition data from the conditional generative model.

6. The electronic device of any one of the previous claims, wherein the instructions are further configured to cause the one or more processors to:
    in response to a value computed by an objective function for the augmented target data being out of a threshold range, discard the augmented target data and the augmented condition data.

7. The electronic device of any one of the previous claims, wherein the instructions are further configured to cause the one or more processors to:
    train a machine learning-based prediction model to predict condition data from target data using the dataset comprising the augmented target data and the augmented condition data.

8. The electronic device of any one of the previous claims, wherein the instructions are further configured to cause the one or more processors to:
    predict new target data of a new molecular structure having a new physical property from the existing target data of an existing molecular structure.

9. A processor-implemented method, comprising:

    determining an extrapolation weight;
    generating an augmented latent vector and augmented condition data that are augmented by extrapolating, based on the extrapolation weight, from a latent vector corresponding to an existing dataset for a target task and from existing condition data of the existing dataset; and
    generating a new dataset comprising augmented target data and the augmented condition data based on a conditional generative model.

10. The method of claim 9, further comprising:
    generating a plurality of existing latent vectors from a plurality of data items of existing target data of the existing dataset based on an encoder model of the conditional generative model.

11. The method of claim 10, wherein the generating of the augmented latent vector and the augmented condition data comprises:

applying the extrapolation weight to each of the existing latent vectors and corresponding existing condition data;
generating the augmented latent vector through a weighted sum based on an extrapolation weight of the existing latent vectors; and
generating the augmented condition data through a weighted sum based on an extrapolation weight of the existing condition data.

12. The method of any one of claims 9-11, wherein the generating of the new dataset comprises:
generating the augmented target data from the augmented latent vector and the augmented condition data using the conditional generative model.

13. The method of any one of claims 9-12, wherein the augmented target data and the augmented condition data are out of coverage of existing target data and the existing condition data.

14. The method of any one of claims 9-13, wherein the generating of the new dataset comprises:

updating the augmented condition data based on the augmented latent vector and the augmented target data; and
preferably, wherein the updating of the augmented condition data comprises:

fixing the augmented latent vector and the augmented target data; and
updating the augmented condition data to increase a likelihood that the augmented target data is to be output from the augmented latent vector and condition data in the conditional generative model.

15. The method of any one of claims 9-14, further comprising:
training a machine learning-based prediction model configured to predict condition data from target data, using the dataset comprising the augmented target data and the augmented condition data.

100

FIG. 1

FIG. 2

From 210

221

Select extrapolation weights from
predetermined weight range

310

Obtain augmented latent vector and augmented condition data
from latent vector corresponding to existing dataset for target task
and existing condition data, based on extrapolation weight

320

Generate new dataset including augmented target data
and augmented condition data based on augmented latent vector
and augmented condition data

330

To 230

FIG. 3

FIG. 4

FIG. 5

FIG. 6

700

| Processor | —710 |
|-----------|------|
| Memory | —720 |

FIG. 7

800

810

820

Processor

Storage device

860

Input device

Output device

Network interface

830

840

850

FIG. 8

Europäisches
Patentamt

European
Patent Office

Office européen
des brevets

# EUROPEAN SEARCH REPORT

**Application Number**

EP 23 19 7504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. Wang et al: "Efficient out-of-distribution detection via CVAE data generation", OpenReview.net (29 Sept 2021; imported: 23 Nov 2021), 29 September 2021 (2021-09-29), XP093127066, Retrieved from the Internet: URL:https://openreview.net/references/pdf?id=3M1et7PBd [retrieved on 2023-11-23] * section 3 * | 1-15 | INV. G06N3/0475 G06N3/047 G06N3/0455 G06N3/08 ADD. G06N3/044 G06N3/0464 |
| X | P. MANGLA ET AL: "On the benefits of defining vicinal distributions in latent space", PATTERN RECOGNITION LETTERS, vol. 152, 19 October 2021 (2021-10-19), pages 382-390, XP086900379, DOI: 10.1016/J.PATREC.2021.10.016 * sections 3 and 4 * | 1-15 | |
| X | W. H. KANG ET AL: "L-Mix: a latent-level instance mixup regularization for robust self-supervised speaker representation learning", IEEE JOURNAL OF SELECTED TOPICS IN SIGNAL PROCESSING, vol. 16, no. 6, 3 August 2022 (2022-08-03), pages 1263-1272, XP011923656, DOI: 10.1109/JSTSP.2022.3196562 * sections III and IV * | 1-15 | **TECHNICAL FIELDS SEARCHED (IPC)** G06N |

-/--

The present search report has been drawn up for all claims

| Place of search | Date of completion of the search | Examiner |
|---|---|---|
| The Hague | 6 February 2024 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 19 7504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. Vernekar et al: "Out-of-distribution detection in classifiers via generation", arXiv:1910.04241v1, 9 October 2019 (2019-10-09), XP093127062, DOI: 10.48550/arxiv.1910.04241 Retrieved from the Internet: URL:https://arxiv.org/abs/1910.04241v1 [retrieved on 2024-02-01] * sections 1 and 3 * | 1-15 | |
| A | D. D. MARTINELLI: "Generative machine learning for de novo drug discovery: A systematic review", COMPUTERS IN BIOLOGY AND MEDICINE, vol. 145, 105403, 13 March 2022 (2022-03-13), XP087055394, DOI: 10.1016/J.COMPBIOMED.2022.105403 * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 6 February 2024 | Douarche, Nicolas |

EPO FORM 1503 03.82 (P04C01)